# EUROPEAN PATENT APPLICATION

(11) **EP 2 096 257 A1**
(43) Date of publication of application: **02.09.2009**
(21) Application number: 06851083.3
(22) Date of filing: 27.12.2006
(51) Int. Cl.: E21B 43/16, F23C 7/00, B01D 71/00

(54) **METHOD FOR INCREASING THE OIL RECOVERY OF A PRODUCTIVE FORMATION**

(30) Priority: 27.12.2006 AZ 2562006
(71) Applicant: Milford Group Ventures Limited, London E1 1Y (GB); Kushnirov, Valery, Baku 1069 (AZ); Yantovsky, Eugene, 52068 Aachen (DE); Shokotov, Nicholas, 09120 Chemnitz (DE)
(72) Inventor: KUSHNIROV, Valery, Baku 1069 (AZ); YANTOVSKY, Eugene, 52068 (DE); SHOKOTOV, Nicholas, 09120 (DE)
(74) Representative: HOFFMANN EITLE
(86) International application number: PCT/AZ2006/000008
(87) International publication number: WO 2008/077200

(57) **Abstract**

The invention relates to the oil industry and can be used for simultaneously producing electric power and oil using by-products of a multipurpose power plant. The aim of said invention is to increase the oil recovery by the actively stimulating formation. The inventive method makes it possible to use all actually known agents, i.e. carbonic acid gas, steam and oxygen, suitable for carrying out said stimulation. The inventive methods for increasing the oil recovery of a formation consist in pumping the by-product of the multipurpose power plant into an oil reservoir, wherein said multipurpose power plant is provided with a piston engine whichuses natural gas and comprises a membrane reactor, the ceramic ion-transport membranes of which are made of metal oxides. Steam, oxygen and carbonic-acid gas are the by-products of the multipurpose power plant.

## Description

The invention relates to the oil industry and can be used for simultaneously producing electric power and oil using by-products of a multipurpose power plant.

Known are multiple methods for increasing the oil recovery efficiency in oil reservoirs by pumping carbonic acid gas into productive formations. These methods are based on a physicochemical process of intensive dissolving CO2 in a formation oil and gas mixture that results in considerable reducing the viscosity of formation oil, improving the filtration properties thereof and hereupon intensive advancement to the bottom hole of exploitation wells.

Apparently, the implementation of this process requires considerable volumes of CO2 whose natural accumulations are extremely rare, and the concentration thereof as a part of numerous natural gases, as a rule, is rather low.

This problem is important from two points of view, economical and ecological. A possibility to increase the crude-oil production is profitable only if there is a cheap source of carbonic acid gas. On the other hand, the emissions of CO2 from the existing electric power stations should be decreased in accordance with the known Kyoto Protocol. Therefore, setting up a Zero Complex is the aim of industrial ecology - to use "waste" of one process as the initial material for another process.

Injection of carbonic acid gas into oil wells as a method for increasing the oil recovery was successfully used in 1972 in the USA where it is acting now in many states and it is considered that it can give an increase of the oil reserves by 1 billion barrels in producing CO2 from natural underground sources. In 2000 the first major project was implemented technologically producing CO2 as a coal gasification product and transporting thereof through a 204 mile-pipeline from the USA to Canada for additional production of 130 billion barrels for 25 years.

A lot of different schematic diagrams and cycles of power plants simultaneously producing electric power and carbonic acid gas have been considered in books /1, 2/. The main incentive for developing thereof was a tendency to pure (no emissions) organic fossil fuel-based power industry. It has been shown that not an organic fuel itself makes the power industry "impure", but the obsolescent method of combustion thereof, that atmospheric emissions can be completely removed if the fuel is combusted in artificial air, where neutral nitrogen is substituted by carbonic acid gas or water steam. Combustion products therein are the same steam or CO2, they easily become liquid and thousand-fold shrink /3/.

The first in the world demonstration electric power station with a capacity of 5 MW substituting nitrogen by water steam was put into operation in March 200o5 by an American firm Clean Energy Systems. The project provides for using produced CO2 for increasing the oil recovery in the nearest well /4/. Oxygen is assumed to be produced by the cryogenic method using nitrogen in an additional cycle utilizing rejected heat.

The most advanced project of a no-emission plant provided with ITMR (Ion-Transport Membrane Reactor) is AZEP of Alstom Company, Norsk Hydro, Siemens with a group of smaller participants /5/. The ITMR of "monolith"-type is used here, the active part thereof is manufactured by the extrusion method, and the chemical composition thereof is not published. The project's peculiarity is the combination of ITMR and a combustion chamber allowing a common gas turbine to be used in reactor-heated air.

In Russia obtaining CO2 as a product of no-emission electric power stations and using thereof for increasing the oil recovery is also well known. The schematic diagram of such an electric power station with CO2-based turbines and the opinion of oil-well experts as to the usefulness of pumping CO2 are given in 1992 /6/: "Method for carbon dioxide drive of oil for the most part is tested in field conditions. It is associated with some important perspectives of increasing the oil recover of formations...".

Known are the methods of increasing the oil recovery by pumping into a formation carbonic acid gas and high-pressure water steam, as well as combustion bottom hole oxygen or electric power by a high-tension cable. The wide usage of these methods is restrained with high prices in producing said agents of exposure on the formation from different sources, frequently far removed from the formation.

Also known are attempts to set up a single power supply source of an oil field from one source with its own primary energy in the form of an associated gas /7/ reciting as follows "a new power plant capable of producing everything whatever is needed to increase the oil recovery, capacity, CO2, nitrogen, direct steam and hot water". Among disadvantages there is an obsolescent, unmanageable and expensive cryogenic method of producing oxygen and using carbonic acid gas-based turbines not manufactured so far.

The main objective of the present invention is increasing the oil recovery by active exposure to an oil-saturated formation. The inventive method makes it possible to produce all the known today agents of such exposure:
- liquid (supercritical) CO2 reducing the oil viscosity on dissolving,
- water steam reducing the oil viscosity by evaluating temperature,
- oxygen for partial bottom hole combustion accompanied by greatly increasing temperature,
- electric power for feeding to the bottom hole by a high-voltage cable.

Naturally, the produced electric power can be used to supply oil pumps, electrodrills, circulating fluid pumps and other needs of oil fields. Extracting oil in a CO2 solution will require separation of CO2 from oil and the burial thereof to prevent atmospheric emissions. Combined production of all the agents in one forced plant (device) provides minimum investment and operating costs compared to separated production on different plants.

A new method of separating air producing pure oxygen in ITMR is used. As a basic engine a pistol engine widely applied in oil fields, or an Otto engine, or Diesel engine is used.

The assigned objective is gained by the method of increasing the oil recovery of a formation by pumping carbonic acid gas produced by a multipurpose power plant provided with a piston engine which uses natural gas and comprises a membrane reactor having ceramic ion-transport membranes made of metal oxides into an oil reservoir wherein by adjusting the volume ratios of pumped CO2 and formation oil and pumo-in pressure a technogenic retrograde liquid-gas system is set up allowing increasing the oil recovery of a productive formation, mostly by dissolving oil in carbonic acid gas and advancing thereof to the surface in a gaseous state.

The assigned objective is also gained by pumping into an oil reservoir the by-products (for example, oxygen) of the inventive multipurpose power plant.

The main advantage of a piston engine compared to a turbine is a greatly higher coefficient of efficiency with the required level of capacity of some megawatts. None of gas turbines in a simple cycle (without a steam-turbine part) has no coefficient of efficiency higher than 30%, whereas a Wartsila natural gas-based piston engine 12U34 80 (provided with an electrogenerator) has an electric coefficient of efficiency 46% with a capacity of 4040kW. If the engine to force /8/ by increasing the oxygen fraction as specified in the present invention, the coefficient of efficiency can grow by other 5-10 percent points.

Mechanical capacity for an electrogenerator drive from chemical fuel energy is obtained by heat release in a consumption, reaction in an engine cylinder

CH4 + 202 => CO2 + 2H2O + 800 kJ/mol or 800/16 = 50 kJ/g methane

With total combustion in a stoichiometric mixture only carbonic acid gas and water steam are produced. In contrast to common engines the burnt gases do not contain nitrogen removed in the membrane reactor. The maximum combustion temperature is determined with an oxygen fraction in the combustible mixture.

Membrane reactors are developed by many firms. As an example, below there is given a construction of a "wafer"-type reactor of the Air Products Company (USA) producing pure oxygen from air with pressure 10-20 bars and a temperature 800-900°C /9/. A thin layer of a membrane as such, fractions of millimeter thick, was applied to a firm plate made from porous refractory ceramics. The membrane as such is not porous, it has ion and electron conductivity at a temperature of 800-1000°C and is made of metal oxides such as lanthanum, strontium, iron, cobalt, copper.

Oxygen from air is adsorbed at a surface, its diatomic molecule breaks into atoms joining two electrons and migrating as double-charged ions through the membrane. The electrons stay within the ceramics and migrate back, and the neutral atoms of oxygen are recombined in molecules and form a stream of pure oxygen from the reactor. The moving force of the stream of oxygen ions serves the difference of partial pressures of oxygen before and after the membrane. Changing the difference of pressures, the oxygen stream can be respectively changed.

Long tests have confirmed the firmness of membranes and the bulk density of the oxygen stream to be about 1 g/sq. m. s.

In none of the publications it has not been suggested so far to use ITMR provided with a forced piston engine to produce CO2 pumping into an oil reservoir or to produce other agents of exposure on the formation in order to increase the oil recovery.

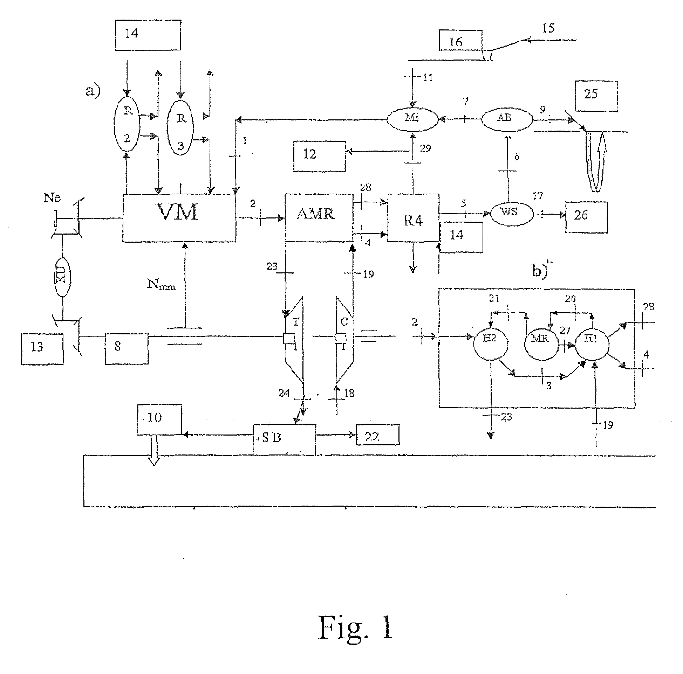

A schematic diagram of such a plant is given in fig.1, wherein VM is a piston engine, H1, H2 are heat exchangers, AMR is a membrane reactor, SB is a steam boiler, R2, R3, R4 are cooler radiators, Nmm is heat of mechanical losses, Mi is a mixer, Ku is a half-coupling, AB is a CO2 stream spreader, Ne is effective power given to the electrogenerator, WS is a water segregator, T is an air turbine, C is an air compressor.

Streams in the schematic diagram: 1 - inlet of a combustible mixture, 2 - engine gases, 3-4 - cooled gases, 5 - CO2 and H2O, 6 - dehydrated CO2, 7 - recirculation of CO2, 8 - a turbine compressor shaft, 9 - withdrawal of CO2 from the cycle, 10 - injection of water steam, 11 - inlet of combustion gas, 12 - extraction of technological oxygen, 13 - a reducer, 14 - cooling water, 15 - a gas-distributing system, 16 - a combustion gas compressor, 17 - water drainage, 18 - passage of atmospheric air, 19 - compressed air, 20 - heated compressed air, 21 - oxygen given off air, 22 -air leaving in atmosphere, 23 - air heated in H2, 24 -air entering the steam boiler, 25 -liquefaction of CO2, 26 - a condensed water accumulator, 27 - reactor oxygen, 28 - heat exchanger oxygen, 29 - cold oxygen in the mixer.

In the inventive schematic diagram (fig. 1) supplying the reactor with compressed air is performed by a turbine compressor R-C on a separate high-speed shaft similarly used for turbocharging diesels. The air emitted from the turbine contains no combustion products, it is absolutely atmospherically safe. By controlling the oxygen stream it is possible to change the mole fraction thereof in the mixer maximizing said fraction up to the firmness of cylinder, piston and valves under evaluation of temperature. The known methods of applying ceramic coatings made of silicon carbide, silicon nitride, zirconium dioxide allow forcing the piston engines in the inventive system.

A variable vane system is provided for adjusting at the inlet of air in the turbine and in the compressor. The vane variation changes the air pressure pumped into the membrane reactor, and consequently, also the oxygen stream and the mole fraction thereof in the combustion mixture. Table 1 clearly shows changing the power as the oxygen fraction increases with respectively raising the fuel consumption.

### Description of the operation of the inventive device

### 1) Major cycle.

A free or associated gas serves a fuel. If its network pressure 15 is insufficient, it increases in compressor 16 provided with an electrodrive. The gas is mixed in the mixer with carbonic acid gas from stream 7 and oxygen from 29 producing a combustion mixture coming in the piston engine to the suction drum of electric ignition cylinders. After compression, combustion and expansion producing useful work, exit gases consisting of CO2, H2O and especially harmful impurities that are emitted in the atmosphere in common engines go out of the engine. In this schematic diagram, the exit gases initially containing no nitrogen go by stream 2 cone to heater H2 giving off the heat to the leaving air, then to heater H1 heating the incoming air, them in stream 28 are cooled in a cooler radiator and by stream 5 come into a water segregator. At a temperature of cooling water (14) the water in combustion products is condensed and in the liquid state is drawn off the cycle. The recirculation thereof is possible to increase the power in the turbine or the engine cylinder. But in any case of the stationary mode, all the water produced from combustion of hydrogen in gas is drawn off the cycle in 17. It also can be used as steam boiler feed water for injecting the steam in 10.

CO2 dehydrated by stream 6 comes into the segregator. The least part thereof equal to the amount of CO2 produced from combustion of hydrogen in gas is brought out by stream 9, liquidized by compressing and cooling in 25 and comes into an injection well. Most of it recirculates 7 back to the cycle to form a combustion mixture in which CO2 plays a role of removed nitrogen.

Pure oxygen produced in membrane reactor (27) by stream 28 comes into a cooler and then into the mixer producing a combustion mixture. If in order to increase the oil recovery the combustion of bottom hole oil is used by injecting oxygen, it is brought out in 12.

### 2) Auxiliary cycle.

Atmosphere air 18 is compressed in a compressor and comes through 19 into heater H1 and then to a membrane reactor through 20. Having given off about 70% of oxygen, the air (chiefly - nitrogen) through 21 is heated in H2 and through 23 comes into the air turbine not only driving shaft 8 compressor but also providing additional mechanical power for the electrogenerator drive through reducer 13 and a free-wheel clutch. To increase the pre-turbine power injection of water from accumulator box 26 is provided. Post-turbine 24 air is not still sufficiently heated to produce steam in the boiler for pumping into well 10. After the boiler the air is emitted in the atmosphere. It contains no combustion products and, therefore, absolutely safe.

Accounting results.

For accounting Table 1 a typical piston engine provided with spark ignition and with the least nominal capacity of 100 kW is selected to make the account representative. With higher capacity the values improve. The cylinder diameter and piston stroke are the same - 0.092 m, the rate of compression - 16, the number of cylinders - 6, the admission coefficient - 0.85. The temperature in points 29, 6, 7, 9, 17 is 313°K.

**Table 1**

| | | | | |
|---|---|---|---|---|
| **Oxygen molar fraction** | **0.209** | **0.30** | **0.40** | **0.50** |
| Methane consumption, mol/s | 0.3885 | 0.5356 | 0.6844 | 0.8213 |
| Oxygen consumption, mol/s | 0.777 | 1.0712 | 1.3688 | 1.6426 |
| Indicated power, kW | 112.07 | 150.84 | 188.58 | 222.26 |
| Effective power, kW | 106.57 | 161.6 | 215.64 | 264.12 |
| Turbine capacity, kW | 68.2 | 87.07 | 106.0 | 123.2 |
| Compressor capacity, kW | 41.44 | 42.94 | 44.44 | 45.83 |
| **Efficiency coefficient, %** | **34.19** | **37.61** | **39.27** | **40.05** |
| **Produced CO2, kg/h** | **61.54** | **84.84** | **108.41** | **130.09** |
| T (2), K | 1187 | 1508 | 1831 | 2124 |
| T (3), K | 1172 | 1297 | 1306 | 1314 |
| T (21), K | 1152 | 1273 | 1273 | 1273 |
| T (24), K | 830 | 1072 | 1319 | 1575 |

From Table 1 it is seen that increasing the oxygen concentration results in important consequences. Alongside with the growth of the efficiency coefficient by 6 abs. percent, the capacity increases more than twice and the production of carbonic acid gas, respectively. The forcing like that is an essential part of the present invention.

The growth of temperature of leaving air closes thereof to the temperature in the technological boilers allowing using standard boilers to produce steam of high parameters pumped into a well.

However, simultaneously, increasing the temperature causes the requirement of protection of the engine with a refractory coating of the piston and cylinder surfaces. Such coatings are well-known.

### Field-geological preconditions for implementing the inventive method

The peculiarities of the process of exposure of pumping CO2 to a oil reservoir depend on the aggregate state thereof.

In the case of increasing the formation temperatures over the critical temperature of carbonic acid gas, and this is the most probable situation in the natural conditions, this predetermines the supercritical gaseous state thereof. In this variant, CO2 having an exclusive dissolving ability in respect of hydrocarbon liquids under direct dissolving in formation oil, decreases the viscosity thereof and abruptly raises the filtration abilities, and at excess volumes (in respect of free oil) dissolves oil bringing thereof to a gaseous state (retrograde evaporation).

The inventive method considers a mechanism of retrograde evaporation of oil in gaseous CO2, that is, a process of forming a technogenic gas condensate system that then through the producing well system is fed into separating units on the surface wherein the process of retrograde condensation of the mixture separating into a liquid phase (oil) and a gaseous phase (CO2) takes place.

The efficiency of this process will be determined by the arrangement of injecting and producing wells, the ratio of the volumes of CO2 pumped in the oil reservoir and free oil, formation temperature and pump-in pressure.

The inventive method postpones for a definite period of time developing the formed technogenic gas condensate oil reservoir (this period is estimated), however, it considerably increases the oil recovery of productive formations.

### References

1. Yantovskii E. Energy and Exergy Currents. NOVA Sci.Publ. NY, 1994.
2. Gottlicher G.,Energetik der Kohlendioxidriickhaltung, Reiche 6, No.421 , VDI Vorschungsberichte, Dusseldorf, 1999.
3. Yantovski E., Gorski J., McGovern J., tenElshof J. Zero Emission Fuel Fired Power Plant with Ion Transport Membrane. 2nd Annual Conference on Carbon sequestration; May 5-8 2003, Alexandria VA, USA.
4. Anderson R., Doyle S., Pronske K. Demonstration and commercialization of Zero emissions Power Plant. 29th Int. Conf. on Coal unitization&Fuel Systems, Apr. 18-22, 2004, Clearwater, FL, USA.
5. Sundquist S., Eklund H. AZEP -an EC funded project for development of a CCGT power plant without CO2 Emissions. 4th Nordic Minisymposium on CO2 capture and storage, Espoo, Finland, Sept. 8-9, 2005.
6. Yantovski E.N, Smoke goes under ground. Carbonic acid gas will increase oil production, not the greenhouse effect. Science and Life. N° 11, 1992.
7. Yantovskii, G.Wall, L.LiTdquist, J.Tryggstad, R.A. Maksutov, K.N,Zvagoisky, V.A.Gavrilenko OCDOPUS project (Oil Enhancement Carbon Dioxide Oxygen Power Universal Supply. FLOWERS'94, Proceedings of the Florence World Energy Research symposium, Firenze, Italy, 1994, pp. 697- 706.
8. Shokotov M., Yantovski E. Forcing of Zero Emissions Piston Engine by Oxygen Enrichment in Membrane Reactor. 5th Annual Conf. On Carbon Sequestration. Alexandria VA.USA, paper 012, May 8-11, 2006.
9. Armstrong P., Sorensen J., Foster T. ITM Oxygen. Progress report. Gasification Technologies, 12-15 Oct.2003.

## Claims

1. Method for increasing the oil recovery of a formation by pumping carbonic acid gas produced by a multipurpose power plant provided with a piston engine which uses natural gas and comprises a membrane reactor having ceramic ion-transport membranes made from metal oxides into an oil reservoir wherein by adjusting the volume ratios of pumped CO2 and formation oil and pump-in pressure a technogenic retrograde liquid-gas system is set up, said system makes it possible to increase the oil recovery of the productive formation by dissolving the oil in carbonic acid gas and advancing thereof to the surface in a gaseous state.

2. Method for increasing the oil recovery of a formation comprising pumping into an oil reservoir the by-product of a multipurpose power plant provided with a piston engine which uses natural gas and comprises a membrane reactor with ceramic ion-transport membranes made from metal oxides.

3. Method according to claim 2 **characterized in that** as a by-product steam is pumped into an oil reservoir.

4. Method according to claim 2 **characterized in that** as a by-product oxygen is pumped into an oil reservoir.
